# FASCICULE DE BREVET EUROPEEN

(11) **EP 1 144 112 B1**
(45) Date de publication et mention de la délivrance du brevet: **20.07.2005**
(21) Numéro de dépôt: 99959510.1
(22) Date de dépôt: 21.12.1999
(51) Int. Cl.: B01J 27/26, B01J 31/24

(54) **PROCEDE DE FABRICATION D'UN CATALYSEUR D'HYDROCYANATION**
VERFAHREN ZUR HERSTELLUNG VON HYDROCYANIERUNGSKATALYSATOREN
METHOD FOR MAKING A HYDROCYANATION CATALYST

(30) Priorité: 22.12.1998 FR 9816469
(43) Date de publication de la demande: 17.10.2001
(73) Titulaire: Rhodia Polyamide Intermediates, 69192 Saint-Fons (FR)
(72) Inventeur: BURATTIN, Paolo, F-69002 Lyon (FR); COQUERET, Pierre, F-69340 Francheville (FR); HUSER, Marc, F-69100 Villeurbanne (FR)
(74) Mandataire: Esson, Jean-Pierre
(86) Numéro de dépôt international: PCT/FR1999/003232
(87) Numéro de publication internationale: WO 2000/037174

(56) Documents cités:
- EP-A- 0 715 890
- FR-A- 2 338 253
- US-A- 3 496 217

## Description

La présente invention concerne un procédé de fabrication d'un catalyseur d'hydrocyanation d'un composé organique à insaturation éthylénique.

Elle concerne plus particulièrement un procédé de fabrication d'un catalyseur d'hydrocyanation comprenant notamment du nickel et une phosphine hydrosoluble.

La réaction d'hydrocyanation notamment de composés organiques comprenant au moins une insaturation éthylénique est une réaction industrielle importante permettant la fabrication de nombreux composés. Ainsi, cette réaction est mise en oeuvre pour la synthèse d'intermédiaires organiques tels que le pentène-3 nitrile utilisé pour la fabrication de monomères tels que l'aminocapronitrile ou l'hexaméthylènediamine.

Cette réaction est notamment décnte dans les brevets français n° 1 599 761, n° 2 338 253, les brevets US 3 655 723, US 3 850 973, US 3 925 445 ou US 3 686 264

Cette réaction est généralement mise en oeuvre en présence d'un catalyseur comprenant un métal de transition. De tels catalyseurs sont décrits dans les brevets ci-dessus.

Ainsi, dans le brevet français n° 2 338 253, il est notamment décnt un catalyseur a base de nickel qui est formé par une solution aqueuse d'une phosphine hydrosoluble comprenant du nickel.

Ce catalyseur est obtenu par addition dans une solution aqueuse de phosphine, d'un composé du nickel soluble ou non dans l'eau. La quantité de nickel dans la phase aqueuse correspond alors à celle de nickel extraite ou complexée par le composé phosphine hydrosoluble. Toutefois, dans un mode de réalisation préféré, il est avantageux d'utiliser un composé de nickel soluble dans le milieu phosphine/eau Ainsi, le brevet français n° 2 338 253 précise que le composé de cyanure de nickel non soluble dans l'eau mais soluble dans la solution aqueuse de phosphine est un compose préféré pour la fabrication d'un tel catalyseur D'autres composés, tels que sels ou complexes organiques du nickel peuvent être avantageusement utilisés pour fabnquer le catalyseur.

Ces différents modes de préparation d'un catalyseur d'hydrocyanation présente comme inconvénient majeur d'utiliser un composé du nickel qui peut être soit très difficile à fabnquer avec un degré de pureté suffisant soit d'un coût et d'une disponibilité affectant l'économie de l'exploitation industrielle de la réaction d'hydrocyanation.

L'invention a pour objectif de remédier à ces inconvénients en proposant un nouveau procédé de fabrication d'un catalyseur d'hydrocyanation utilisant comme produits de départ des composés de nickel accessibles et pouvant être de grande pureté.

A cet effet, l'invention propose un procédé de préparation d'un catalyseur d'hydrocyanation d'un composé organique consistant en une solution aqueuse d'au moins une phosphine hydrosoluble et de nickel, caractérisé en ce qu'il consiste à mettre en contact, en absence du composé organique à hydrocyaner, une solution aqueuse d'une phosphine hydrosoluble et un hydroxyde de nickel, à ajouter dans le milieu du cyanure d'hydrogène ou un composé générateur de cyanure d'hydrogène, et à maintenir le milieu sous agitation jusqu'à dissolution du nickel, puis à soumettre le milieu à une réduction pour transformer au moins partiellement le nickel dissous à un état d'oxydation 0.

Selon une caractéristique préférentielle de l'invention le milieu, après addition du cyanure d'hydrogène, est maintenu sous agitation à une température inférieure à 100°C préférentiellement compnse entre 20°C et 80°C.

La quantité de cyanure d'hydrogène ajoutée est au moins égale à la quantité stoechiométrique pour transformer l'hydroxyde de nickel en cyanure de nickel.

Avantageusement, la quantité de cyanure d'hydrogène ajoutée sera de 30 % à 200 % supérieure à la quantité stoechiométrique.

Après dissolution au moins partielle de l'hydroxyde de nickel, la solution aqueuse est soumise à une étape de réduction du nickel de degré d'oxydation supérieur à zéro pour obtenir du nickel à l'état d'oxydation zéro.

Cette réaction de réduction est avantageusement réalisée après addition dans le milieu d'une faible quantité de nickel à l'état d'oxydation zéro. Cette addition peut être réalisée par l'ajout d'une faible quantité de catalyseur contenant du nickel à l'état d'oxydation zéro.

L'étape de régénération du catalyseur, ou en d'autres termes la réduction du nickel à l'état d'oxydation 0 peut être réalisée par plusieurs procédés tels qu'une réduction par de l'hydrogène gazeux, une réduction électrochimique ou addition d'un agent réducteur organique ou minéral. Les procédés de réduction sont connus et décrits notamment dans les brevets WO 97/24184, EP 0 715 890 et FR 1 599 761.

La quantité de composé du nickel utilisée est choisie de telle sorte qu'il y ait par litre de solution réactionnelle entre 10⁻⁴ et 1, et de préférence entre 0,005 et 0,5 mole de nickel.

La quantité de phosphine hydrosoluble utilisée pour préparer la solution réactionnelle est choisie de telle sorte que le nombre de moles de ce composé rapporté à 1 mole de nickel soit de 0,5 à 2000 et de préférence de 2 à 300.

Comme composés phosphines hydrosolubles convenables, on peut citer les composés décrits dans le brevet 2 338 253 ou dans les demandes de brevet WO 97/12857 et EP 0 650 959. Cette énumération n'au aucun caractère limitatif.

Ainsi des phosphines convenables pour l'invention répondent à la formule générale (I) suivante : 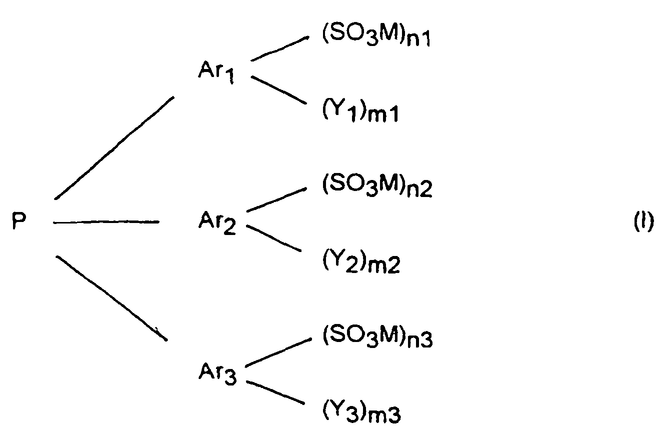 dans laquelle :
* Ar₁, Ar₂ et Ar₃, identiques ou différents, représentent des groupements aryles
* Y₁, Y₂ et Y₃, identiques ou différents, représentent
   . un radical alkyle ayant 1 à 4 atomes de carbone, un radical alcoxy ayant 1 à 4 atomes de carbone,
   . un atome d'halogène,
   . un radical CN,
   . un radical NO₂
   . un radical OH,
   . un radical NR₁R₂, dans la formule duquel R₁ et R₂, identiques ou différents, représentent un radical alkyle ayant 1 à 4 atomes de carbone,
* M est un reste cationique minéral ou organique choisi, de manière à ce que le composé de formule (I) soit soluble dans l'eau, dans le groupe comprenant :
   . H⁺,
   . les cations dérivés des métaux alcalins ou alcalino-terreux,
   . N(R₃R₄R₅R₆₎⁺ avec R₃,R₄,R₅ et R₆, identiques ou différents, représentant un radical alkyle ayant 1 à 4 atomes de carbone ou un atome d'hydrogène,
   . les autres cations dénvés des métaux dont les sels de l'acide benzènesulfonique sont solubles dans l'eau,
* m₁, m₂ et m₃ sont des nombres entiers, identiques ou différents, de 0 à 5,
* n₁, n₂ et n₃ sont des nombres entiers, identiques ou différents, de 0 à 3, l'un d'entre eux au moins étant égal ou supérieur à 1.

Comme exemples de métaux dont les sels de l'acide benzènesulfonique sont solubles dans l'eau, on peut citer le plomb, le zinc et l'étain.

Par l'expression soluble dans l'eau, on entend de manière générale dans le présent texte un composé soluble à au moins 0,01 g par litre d'eau.

Parmi les phosphines de formule (I), on préfère celles pour lesquelles :
- Ar₁, Ar₂ et Ar₃ sont des groupements phényle,
- Y₁, Y₂ et Y₃ représentent des groupements choisis parmi
   . les radicaux alkyle ayant de 1 à 2 atomes de carbone,
   . les radicaux alkoxy ayant de 1 à 2 atomes de carbone,
- M représente un cation choisi parmi le groupe comprenant
   . H⁺
   . les cations dénvés de Na, K, Ca, Ba
   . NH₄+
   . les cations tétraméthylammonium, tétraéthylammonium, tétrapropylammonium, tétrabutylammonium
- m₁, m₂ et m₃ sont des nombres entiers de 0 à 3
- n₁, n₂ et n₃ sont des nombres entiers de 0 à 3, l'un au moins étant également supérieur à 1.

Parmi ces phosphines, les plus particulièrement préférées sont les sels de sodium, de potassium, de calcium, de baryum, d'ammonium, de tétraméthylammonium et de tétraéthylammonium, des mono(sulfophényl) diphényl-phosphine, di(sulfophényl) phényl-phosphine et tri(sulfophényl)-phosphine dans les formules desquelles les groupements SO₃ sont de préférence en position méta.

On peut citer comme autres exemples de phosphines de formule (I) pouvant être mises en oeuvre dans le procédé de l'invention, les sels alcalins ou alcalino-terreux, les sels d'ammonium, les sels d'ammonium quaternaire des (sulfo-3 méthyl-4 phényl) di (méthyl-4 phényl)-phosphine ; (sulfo-3 méthoxy-4 phényl) di(méthoxy-4 phényl)-phosphine ; (sulfo-3 chloro-4 phényl) di(chloro-4 phényl)-phosphine ; di(sulfo-3 phényl) phényl-phosphine ; di(sulfo-4 phényl) phényl-phosphine ; di(sulfo-3 méthyl-4 phényl) (méthyl-4 phényl)-phosphine ; di(sulfo-3 méthoxy-4 phényl) (méthoxy-4 phényl) phosphine ; di(sulfo-3 chloro-4 phényl) (chloro-4 phényl) phosphme ; tri(sulfo-3 phényl)-phosphine ; tri(sulfo-4 phényl)-phosphine ; (tri(sulfo-3 méthyl-4 phényl)-phosphine ; tri(sulfo-3, méthoxy-4 phényl)-phosphine ; tri(sulfo-3 chloro-4 phényl)-phosphine ; (sulfo-2 méthyl-4 phényl) (sulfo-3, méthyl-4 phényl) (disulfo-3,5 méthyl-4 phényl)-phosphine ; (sulfo-3 phényl) (sulfo-3 chloro-4 phényl) (disulfo-3,5 chloro-4 phényl)-phosphine.

On peut bien évidemment utiliser un mélange de ces phosphines. En particulier, on peut utiliser un mélange de phosphines mono-, di- et tri-métasulfonées.

Des phosphines monodentate ou bidentate de formules générales (II) et (III) suivantes sont également convenables pour l'invention. 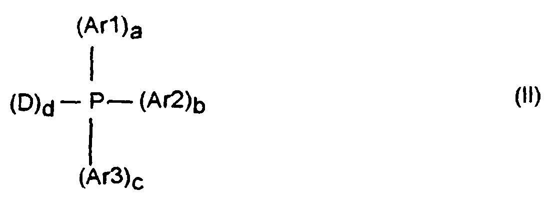 dans laquelle :
- Ar1 et Ar2, identiques ou différents, représentent des groupes aryle ou aryle comportant un ou plusieurs substituants tels que :
   - radical alkyle ou alcoxy ayant 1 à 4 atomes de carbone,
   - atome d'halogène,
   - groupe hydrophile comme :
      -COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dénvés de métaux dont les sels des acides arylcarboxyliques, des acides arylsulfoniques ou des acides arylphosphoniques sont solubles dans l'eau,
      -N(R)₄ dans la formule duquel les symboles R, identiques ou différents, représentent un atome d'hydrogène ou un radical alkyle ayant de 1 à 4 atomes de carbone,
      -OH
- Ar3 représente un groupe aryle comportant un ou plusieurs substituants tels que .
   - radical alkyle ou alcoxy ayant 1 à 4 atomes de carbone,
   - atome d'halogène,
   - groupe hydrophile comme :
      -COOM, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dénvés de métaux dont les sels des acides arylcarboxyliques ou des acides arylphosphoniques sont solubles dans l'eau,
      -N(R)₄ dans la formule duquel les symboles R, identiques ou différents, représentent un atome d'hydrogene ou un radical alkyle ayant de 1 à 4 atomes de carbone,
      -OH,
   l'un au moins desdits substituants de Ar3 étant un groupe hydrophile tel que défini précédemment,
- a représente 0 ou 1,
- b représente 0 ou 1,
- c représente un nombre entier de 0 à 3,
- D représente un groupe alkyle, un groupe cycloalkyle, un groupe alkyle ou cycloalkyle comportant un ou plusieurs substituants tels que :
   - radical alcoxy ayant 1 à 4 atomes de carbone,
   - atome d'halogène,
   - groupe hydrophile comme :
      -COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dénvés de métaux dont les sels des acides arylcarboxyliques, des acides arylsulfoniques ou des acides phosphoniques sont solubles dans l'eau,
      -N(R)₄ dans la formule duquel les symboles R, identiques ou différents, représentent un atome d'hydrogène ou un radical alkyle ayant de 1 à 4 atomes de carbone,
      -OH
- d représente un nombre entier de 0 à 3,
- la somme (a+b+c+d) est égale à 3 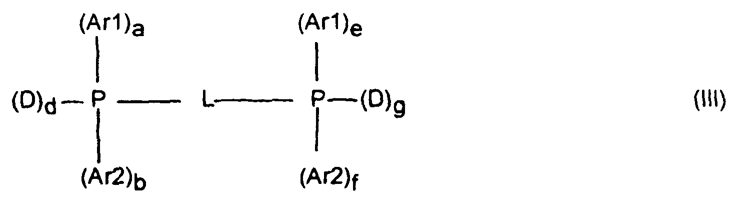 dans laquelle :
   - Ar1, Ar2 et D ont les significations indiquées précédemment pour la formule (II),
   - a, b, e et f représentent chacun 0 ou 1,
   - d et g représentent chacun un nombre entier de 0 à 2,
   - la somme (a+b+d) est égale a 2,
   - la somme (e+f+g) est égale à 2,
   - L représente un lien valentiel simple ou un radical hydrocarboné divalent tel qu'un radical alkylène, un radical cycloalkylène, un radical arylène, un radical dérivant d'un hétérocycle comportant un ou deux atomes d'oxygène, d'azote ou de soufre dans le cycle, ces différents radicaux cycliques étant liés directement à l'un des atomes de phosphore ou aux deux atomes de phosphore ou étant lié à l'un des atomes de phosphore ou aux deux par l'intermédiaire d'un radical alkylène linéaire ou ramifié ayant de 1 à 4 atomes de carbone, le ou les cycles éventuellement parties du radical divalent L pouvant comporter un ou plusieurs substituants tels que groupe alkyle ayant 1 à 4 atomes de carbone.

Par l'expression soluble dans l'eau, on entend un composé soluble à au moins 0,01 g par litre d'eau.

A titre d'exemples non limitatifs de phosphines de formule générale (II), on peut citer notamment la tris(hydroxyméthyl) phosphine, la tris(2-hydroxyéthyl) phosphine, la tris(3-hydroxypropyl) phosphine, la tris(2-carboxyméthyl) phosphine, le sel de sodium de la tris(3-carboxylatophényl) phosphine, la tris(3-carboxyéthyl) phosphine, l'iodure de la tris(4-triméthylammoniumphényl) phosphine, le sel de sodium de la tris(2-phosphonatoéthyl) phosphine, la bis(2-carboxyéthyl) phényl phosphine.

A titre d'exemples non limitatifs de phosphines de formule générale (III), on peut citer notamment le sel de sodium du 2,2'-bis[di(sulfonatophényl)phosphino]-1,1'-binaphtyl, le sel de sodium du 1,2-bis[di(sulfonatophényl)phosphinométhyl] cyclobutane (CBDTS), le 1,2-bis(dihydroxyméthyl-phosphino) éthane, le 1,3-bis(dihydroxyméthylphosphino) propane, le sel de sodium du 2,2'-bis[di(sulfonatophényl)phosphinométhyl]-1,1'-binaphtyl.

Certaines des phosphines hydrosolubles de formule (I) à (III) sont disponibles dans le commerce.

Pour la préparation des autres, on peut se référer aux procédés généraux ou particuliers de synthèse des phosphines décrits dans les ouvrages généraux comme HOUBEN-WEYL, Method der organischen Chemie, organische Phosphor Verbindungen, teil 1 (1963).

Enfin, pour la préparation des dérivés hydrosolubles non décrits, on peut à partir des phosphines ne comportant pas de substituants hydrosolubles définis précédemment, procéder à l'introduction d'un ou plusieurs de ces substituants hydrophiles. Ainsi les groupements sulfonates par exemple peuvent être introduits par la réaction de SO₃ dans l'acide sulfurique. Les groupes carboxylates, phosphonates, ammonium quaternaires peuvent de même être introduits en appliquant les méthodes chimiques connues pour ce type de synthèse.

Les composes organiques comportant au moins une liaison éthylénique qui peuvent être soumis à une hydrocyanation en présence d'un catalyseur préparé selon le procédé de l'invention, sont les dioléfines comme le butadiène, l'isoprène, l'hexadiène-1,5, le cyclooctadrène-1,5, les nitriles aliphatiques à insaturation éthylénique, particulièrement les pentène-nitriles linéaires comme le pentène-3 nitrile, le pentene-4 nitrile, les monooléfines comme le styrène, le méthyl-styrène, le vinyl-naphtalène, le cyclohexène, le méthyl-cyclohexène ainsi que les mélanges de plusieurs de ces composés.

Les pentène-nitriles notamment peuvent contenir des quantités, généralement minoritaires, d'autres composés, comme le méthyl-2 butène-3 nitrile, le méthyl-2 butène-2 nitrile, le pentène-2 nitrile, le valéronitrile, l'adiponitrile, le méthyl-2 glutaronitrile, l'éthyl-2 succinonitrile ou le butadiène, provenant par exemple de la réaction antérieure d'hydrocyanation du butadiène.

Lors de l'hydrocyanation du butadiène, il se forme avec les pentène-nitriles linéaires des quantités non négligeables de méthyl-2 butène-3 nitrile et de méthyl-2 butène-2 nitrile.

Le procédé de préparation d'une solution catalytique conforme à l'invention est mis en oeuvre avant l'introduction de la solution catalytique dans la zone de réaction d'hydrocyanation d'un composé organique éthylénique insaturé.

La réaction d'hydrocyanation est généralement réalisée à une température de 10°C à 200°C et de préférence de 30°C à 120°C.

Le procédé de l'invention peut être mis en oeuvre de manière continue ou discontinue.

Le cyanure d'hydrogène mis en oeuvre peut être préparé à partir des cyanures métalliques, notamment le cyanure de sodium, ou des cyanhydnnes.

Le cyanure d'hydrogène est introduit dans le réacteur sous forme gazeuse ou sous forme liquide. Il peut également être préalablement dissous dans un solvant organique.

Dans le cadre d'une mise en oeuvre discontinue, on peut en pratique charger dans un réacteur, préalablement purgé à l'aide d'un gaz inerte (tel qu'azote, argon), soit une solution aqueuse contenant la totalité ou une partie des divers constituants tels que la phosphine hydrosoluble, le composé de métal de transition, les éventuels réducteur et solvant, soit séparément lesdits constituants. Généralement le réacteur est alors porté à la température choisie, puis le composé à hydrocyaner est introduit. Le cyanure d'hydrogène est alors lui-même introduit, de préférence de manière continue et régulière.

Lorsque la réaction (dont on peut suivre l'evolution par dosage de prelevements) est terminee, le mélange réactionnel est soutire après refroidissement et les produits de la réaction sont isolés par décantation, éventuellement suivie d'une extraction de la couche aqueuse à l'aide d'un solvant approprié, tel que par exemple les solvants non miscibles à l'eau cités précédemment.

La solution catalytique aqueuse peut alors être recyclée dans une nouvelle réaction d'hydrocyanation de composés organiques comportant au moins une double liaison éthylénique, après avoir été traitée éventuellement par un procédé de regenération.

Il est également possible d'utiliser le catalyseur en association avec un acide de Lewis.

L'acide de Lewis utilisé comme cocatalyseur permet notamment, dans le cas de l'hydrocyanation des nitriles aliphatiques à insaturation éthylénique, d'améliorer la linéarité des dinitriles obtenus, c'est-à-dire le pourcentage de dinitrile linéaire par rapport à la totalité des dinitriles formés, et/ou d'augmenter la durée de vie du catalyseur.

Par acide de Lewis, on entend dans le présent texte, selon la définition usuelle, des composés accepteurs de doublets électroniques.

On peut mettre en oeuvre notamment les acides de Lewis cités dans l'ouvrage édité par G A. OLAH "Friedel-Crafts and related Reactions", tome I, pages 191 à 197 (1963).

Les acides de Lewis qui peuvent être mis en oeuvre comme cocatalyseurs dans le présent procédé sont choisis parmi les composés des éléments des groupes Ib, IIb, IIIa, IIIb, IVa, IVb, Va, Vb, VIb, VIIb et VIII de la Classification périodique des éléments, dans la mesure où lesdits composés sont au moins partiellement solubles dans l'eau Ces composés sont le plus souvent des sels, notamment des halogénures, de préférence chlorures et bromures, des sulfates, des carboxylates et des phosphates

A titre d'exemples non limitatifs de tels acides de Lewis, on peut citer le chlorure de zinc, le bromure de zinc, l'iodure de zinc, le chlorure de manganèse, le bromure de manganèse, le chlorure de cadmium, le bromure de cadmium, le chlorure stanneux, le bromure stanneux, le sulfate stanneux, le tartrate stanneux, les chlorures ou bromures des éléments des terres rares comme le lanthane, le cérium, le praséodyme, le néodyme, le samanum, l'europium, le gadolinium, le terbium, le dysprosium, l'holmium, l'erbium, le thulium, l'ytterbium et le lutétium, le chlorure de cobalt, le chlorure ferreux, le chlorure d'yttrium.

On peut bien entendu mettre en oeuvre des mélanges de plusieurs acides de Lewis.

Il est également intéressant le cas échéant de stabiliser l'acide de Lewis en solution aqueuse par l'adjonction d'un halogénure de métal alcalin ou alcalino-terreux comme le chlorure de lithium, le chlorure de sodium, le chlorure de calcium ou le chlorure de magnésium notamment Le rapport molaire halogénure de métal alcalin ou alcalino-terreux/acide de Lewis vane de manière très large, par exemple de 0 à 100, le rapport particulier pouvant être ajusté selon la stabilité dans l'eau de l'acide de Lewis.

Parmi les acides de Lewis, on préfère tout particulièrement le chlorure de zinc, le bromure de zinc, le chlorure stanneux, le bromure stanneux, le chlorure stanneux stabilisé par le chlorure de lithium, le chlorure stanneux stabilisé par le chlorure de sodium, les mélanges chlorure de zinc/chlorure stanneux.

Le cocatalyseur acide de Lewis mis en oeuvre représente généralement de 0,01 à 50 moles par mole de composé de nickel, et de préférence de 1 à 10 mole par mole.

Comme pour la mise en oeuvre du procédé de base de l'invention, la solution catalytique utilisée pour l'hydrocyanation en présence d'acide de Lewis peut être préparée avant son introduction dans la zone de réaction, par exemple par addition à la solution aqueuse de la phosphine hydrosoluble, de la quantité appropnée d'hydroxyde de nickel, de l'acide de Lewis et éventuellement du réducteur.

Il est également possible dans les conditions du procédé d'hydrocyanation de la présente invention, et notamment en opérant en présence du catalyseur décnt précédemment comportant au moins une phosphine hydrosoluble et au moins un composé de nickel, de réaliser, en absence de cyanure d'hydrogène, l'isomérisation du méthyl-2 butène-3 nitrile en pentène-nitriles.

Le méthyl-2 butène-3 nitrile soumis à l'isomérisation selon l'invention peut être mis en oeuvre seul ou en mélange avec d'autres composés.

Ainsi on peut engager du méthyl-2 butène-3 nitrile en mélange avec du méthyl-2 butène-2 nitrile, du pentène-4 nitrile, du pentene-3 nitrile, du pentène-2 nitrile, du butadiène, de l'adiponitrile, du méthyl-2 glutaroronitrile, de l'éthyl-2 succinonitrile ou du valéronitrile.

Ainsi, il est particulièrement intéressant de traiter le mélange réactionnel provenant de l'hydrocyanation du butadiène par HCN en présence d'une solution aqueuse d'au moins une phosphine hydrosoluble d'au moins un composé de nickel, plus préférentiellement d'un composé du nickel au degré d'oxydation 0, tel que défini précédemment.

Dans le cadre de cette variante préférée, le système catalytique étant déjà présent pour la réaction d'hydrocyanation du butadiène, il suffit d'arrêter toute introduction de cyanure d'hydrogène, pour laisser se produire la réaction d'isomérisation.

On peut, le cas échéant, dans cette variante faire un léger balayage du réacteur à l'aide d'un gaz inerte comme l'azote ou l'argon par exemple, afin de chasser l'acide cyanhydrique qui pourrait être encore présent.

La réaction d'isomensation est généralement réalisée a une température de 10°C à 200°C et de préférence de 60°C à 120°C.

Dans le cas préféré d'une isomérisation suivant immédiatement la réaction d'hydrocyanation du butadiène, il sera avantageux d'opérer à la température à laquelle l'hydrocyanation a été conduite.

Comme pour le procédé d'hydrocyanation de composés à insaturation éthylénique, la solution catalytique utilisée pour l'isoménsation peut être préparée avant son introduction dans la zone de réaction, par exemple par addition à la solution aqueuse d'une phosphine hydrosoluble, de la quantité appropnée de composé de nickel et éventuellement du réducteur. Il est également possible de préparer la solution catalytique "in situ" par simple mélange de ces divers constituants. La quantité de composé de nickel, ainsi que la quantité de phosphine hydrosoluble sont les mêmes que pour la réaction d'hydrocyanation Ce catalyseur peut également être prepare par le procédé de l'invention avant son introduction dans la zone de réaction.

Bien que la réaction d'isoménsation soit conduite généralement sans tiers-solvant, il peut être avantageux de rajouter un solvant organique inerte, non miscible à l'eau, qui pourra être celui de l'extraction ultérieure. C'est notamment le cas lorsqu'un tel solvant a été mis en oeuvre dans la réaction d'hydrocyanation du butadiène ayant servi à préparer le milieu soumis à la réaction d'isomérisation. De tels solvants peuvent être choisis parmi ceux qui ont été cités précédemment pour l'hydrocyanation.

En fin de réaction, il est très aisé de séparer le catalyseur des produits de la réaction d'isomérisation comme cela a été indiqué pour l'hydrocyanation et de le recycler le cas échéant dans l'une des réactions d'hydrocyanation décrites précédemment ou dans une nouvelle réaction d'isomérisation, après traitement de la phase aqueuse et/ou de la phase solide selon le procédé de l'invention par un cyanure d'hydrogène pour dissoudre ladite phase solide.

D'autres avantages et détails de l'invention apparaitront plus clairement au vu des exemples donnés ci-dessous uniquement à titre indicatif.

### EXEMPLE 1

Dans un erlemeyer de 1 litre muni d'un barreau aimanté, on charge 150 cm³ d'une solution aqueuse de chlorure de nickel à 1 mole/litre. Sous agitation à température ambiante, on coule 170 cm³ d'une solution aqueuse de soude à 2 moles/litre sur une durée de 3 heures puis on maintient le mélange sous agitation pendant 1 heure. On laisse ensuite le système au repos le temps nécessaire pour que l'hydroxyde de nickel precipite se dépose et que la solution aqueuse surnageante devienne limpide On procède alors au lavage du précipité d'hydroxyde de nickel Pour cela, on siphonne au maximum la phase aqueuse sumageante, on ajoute 200 ml d'eau distillée, on remet sous agitation 1 heure puis à nouveau au repos le temps nécessaire à la décantation de la phase solide , on renouvelle cette série d'opérations jusqu'à l'obtention d'une phase aqueuse surnageante de pH neutre. La phase solide est alors récupérée par filtration sur un fntté de porosité 4 Ladite filtration est menée de manière à obtenir l'hydroxyde de nickel sous forme d'une pâte que nous qualifierons par la suite d'hydroxyde de nickel fraîchement précipité et humide. Un dosage du Ni sur 3 prélèvements de cette pâte humide stockée dans un récipient fermé conduit un titre pondéral moyen de 25,2 % pds de Ni.

Dans un réacteur en verre de 150 cm³ purgé à l'argon et équipé d'une turbine auto-aspirante, on charge 57,5 g d'une solution de sel de sodium de triphénylphosphine trisulfonée (TPPTS) à 30% pds dans l'eau. On dégaze cette solution. On introduit ensuite 1,445 g de l'hydroxyde de nickel fraîchement précipité et humique obtenu précédemment Sous agitation (1200 tours/minute) et à température ambiante, on injecte en ciel de réacteur, avec un débit constant et sur une durée d'une heure, 0,640 ml d'acide cyanhydrique par l'intermédiaire d'une seringue thermostatée à -10°C Au cours de l'injection de l'HCN, la solution devient rapidement orangée puis au rouge. Après injection, le mélange est maintenu sous agitation pendant 3 heures à 80°C, puis refroidi à température ambiante où il est maintenu 12 heure sous agitation Après un balayage à l'argon du ciel du réacteur pendant environ1 heure, on récupère une solution homogène, limpide et de coloration rouge foncé. Un dosage du Ni sur un prélèvement filtré au moyen d'un filtre Millipore Millex-HV® (Hydrophilic PVDF 0 45 µm) fournit le résultat suivant : 106 mmol/kg.

La solution ainsi récupérée peut être utilisée comme solution catalytique après avoir été soumise à une étape de réduction électrochimique après addition de nickel à l'état d'oxydation (0).

### EXEMPLE 2

Dans un réacteur en verre de 150 cm³ purgé à l'argon et équipé d'une turbine auto-aspirante, on charge 57,8 g d'une solution de sel de sodium de triphénylphosphine trisulfonée (TPPTS) à 30% pds dans l'eau. On dégaze cette solution. On introduit ensuite, 606 mg d'un hydroxyde de nickel commercial (ALDRICH) contenant environ 61 % pds de Ni. Sous agitation (1200 tours/minute) et à température ambiante, on injecte en ciel de réacteur, avec un débit constant et sur une durée d'une heure, 0,640 ml d'acide cyanhydrique par l'intermédiaire d'une seringue thermostatée à -10°C. Au cours de l'injection de l'HCN, la solution devient rapidement orangée puis au rouge. Après injection, le mélange est maintenu sous agitation pendant 3 heures à 80°C, puis refroidi à température ambiante où il est maintenu 12 heures sous agitation Après un balayage à l'argon du ciel du réacteur pendant environ 1 heure, on récupère une solution homogène, limpide et de coloration rouge foncé Un dosage du Ni sur un prélèvement filtré au moyen d'un filtre Millipore Millex-HV® (Hydrophilic PVDF 0 45 µm) fournit le résultat suivant : 103 mmol/kg.

La solution ainsi récupérée peut être utilisée comme solution catalytique après avoir été soumise à une étape de réduction électrochimique après addition de nickel à l'état d'oxydation (0).

## Revendications

1. Procédé de fabrication d'un catalyseur d'hydrocyanation de composé organique consistant en une solution aqueuse d'au moins une phosphine hydrosoluble et de nickel, **caractérisé en ce qu'**il consiste à mettre en contact, en absence du composé organique à hydrocyaner, une solution aqueuse d'au moins une phosphine hydrosoluble et un hydroxyde de nickel, à ajouter dans le milieu du cyanure d'hydrogène ou un composé générateur de cyanure d'hydrogène, à maintenir le milieu sous agitation jusqu'à dissolution au moins partielle du nickel et à soumettre ledit milieu à une réduction d'au moins une partie de nickel de degré d'oxydation supérieur à zéro, à l'état d'oxydation zéro.

2. Procédé selon la revendication 1, caracténsé en ce que la solution est maintenue sous agitation à une température inférieure à 100°C, de préférence entre 20°C et 80°C.

3. Procédé selon la revendication 1 ou 2, **caractérisé en ce qu'**avant l'étape de réduction du nickel, du nickel à l'état d'oxydation zéro est ajouté dans le milieu.

4. Procédé selon l'une des revendications précédentes, **caractérisé en ce que** la quantité de cyanure d'hydrogène ajouté est au moins égale à la quantité stoechiométrique nécessaire pour transformer l'hydroxyde de nickel en cyanure de nickel.

5. Procédé selon la revendication 4, **caractérisé en ce que** la quantité de cyanure d'hydrogène ajoutée est supérieure de 30 % à 200 % à la quantité stoechiométrique.

6. Procédé selon l'une des revendications précédentes, caracténsé en ce que la quantité de phosphine hydrosoluble exprimée en nombre de moles pour 1 mole de nickel est compnse entre 0,5 et 2000, de préférence entre 2 et 300.

7. Procédé selon l'une des revendications précédentes, **caractérisé en ce que** la réduction du nickel est réalisée par traitement par, l'hydrogène gazeux, réduction électrochimique ou réduction par des réducteurs minéraux ou organiques.

## Patentansprüche

1. Verfahren zur Herstellung eines Katalysators zur Hydrocyanierung einer organischen Verbindung, der aus einer wässrigen Lösung wenigstens eines wasserlöslichen Phosphins und Nickel besteht, **dadurch gekennzeichnet, dass** es darin besteht, in Abwesenheit der organischen Verbindung, die hydrocyaniert werden soll, eine wassrige Lösung wenigstens eines wasserlöslichen Phosphins und ein Nickelhydroxid in Kontakt zu bringen, dem Medium Cyanwasserstoff oder eine Cyanwasserstoff erzeugende Verbindung zuzugeben, das Medium weiterzurühren, bis sich das Nickel wenigstens teilweise gelöst hat, und besagtes Medium einer Reduktion von wenigstens einem Teil des Nickels in der Oxidationsstufe größer null in die Oxidationsstufe null zu unterziehen.

2. Verfahren gemäß Anspruch 1, **dadurch gekennzeichnet, dass** die Lösung bei einer Temperatur unter 100 °C, vorzugsweise zwischen 20 °C und 80 °C weitergerührt wird.

3. Verfahren gemäß Anspruch 1 oder 2, **dadurch gekennzeichnet, dass** vor dem Schritt zur Reduktion des Nickels dem Medium Nickel in der Oxidationsstufe null zugegeben wird.

4. Verfahren gemäß einem der vorhergehenden Ansprüche, **dadurch gekennzeichnet, dass** die Menge an zugegebenem Cyanwasserstoff wenigstens gleich der stöchiometrischen Menge ist, die zur Umwandlung des Nickelhydroxids zu Nickelcyanid notwendig ist.

5. Verfahren gemäß Anspruch 4, **dadurch gekennzeichnet, dass** die zugegebene Menge an Cyanwasserstoff 30 % bis 200 % größer als die stöchiometrische Menge ist.

6. Verfahren gemäß einem der vorhergehenden Ansprüche, **dadurch gekennzeichnet, dass** die Menge an wasserlöslichem Phosphin, ausgedrückt in Anzahl an Molen auf 1 Mol Nickel, zwischen 0,5 und 2000, vorzugsweise zwischen 2 und 300 liegt.

7. Verfahren gemäß einem der vorhergehenden Ansprüche, **dadurch gekennzeichnet, dass** die Reduktion des Nickels durch Behandlung mit gasförmigem Wasserstoff, elektrochemische Reduktion oder Reduktion mit mineralischen oder organischen Reduktionsmitteln durchgeführt wird.

## Claims

1. Process for the manufacture of a catalyst for the hydrocyanation of an organic compound comprising an aqueous solution of at least one water-soluble phosphine and of nickel, **characterized in that** it consists in bringing into contact, in the absence of the organic compound to be hydrocyanated, an aqueous solution of at least one water-soluble phosphine and a nickel hydroxide, in adding, to the medium, hydrogen cyanide or a compound which generates hydrogen cyanide, in keeping the medium stirred until at least partial dissolution of the nickel and in subjecting the said medium to a reduction of at least a portion of the nickel with a degree of oxidation of greater than zero to the zero oxidation state.

2. Process according to Claim 1, **characterized in that** the solution is kept stirred at a temperature of less than 100°C, preferably between 20°C and 80°C.

3. Process according to Claim 1 or 2, **characterized in that**, before the stage of reduction of the nickel, nickel in the zero oxidation state is added to the medium.

4. Process according to one of the preceding claims, **characterized in that** the amount of hydrogen cyanide added is at least equal to the stoichiometric amount necessary to convert the nickel hydroxide to nickel cyanide.

5. Process according to Claim 4, **characterized in that** the amount of hydrogen cyanide added is greater by 30% to 200% than the stoichiometric amount.

6. Process according to one of the preceding claims, **characterized in that** the amount of water-soluble phosphine, expressed as number of moles per 1 mol of nickel, is between 0.5 and 2000, preferably between 2 and 300.

7. Process according to one of the preceding claims, **characterized in that** the reduction of the nickel is carried out by treatment with gaseous hydrogen, electrochemical reduction or reduction by inorganic or organic reducing agents.
